# EUROPÄISCHE PATENTSCHRIFT

(11) **EP 3 148 384 B1**
(45) Veröffentlichungstag und Bekanntmachung des Hinweises auf die Patenterteilung: **26.02.2020**
(21) Anmeldenummer: 14816145.8
(22) Anmeldetag: 04.12.2014
(51) Int. Cl.: A47J 31/42, A47J 42/50

(54) **KAFFEEBOHNENBEHÄLTER**
COFFEE BEAN CONTAINER
RÉSERVOIR À GRAINS DE CAFÉ

(30) Priorität: 30.05.2014 DE 102014107647
(43) Veröffentlichungstag der Anmeldung: 05.04.2017
(73) Patentinhaber: Eugster/Frismag AG, 8580 Amriswil (CH)
(72) Erfinder: IOANNONE, Matteo, 8162 Steinmaur (CH); ROTH, Alain, 8593 Kesswil (CH)
(74) Vertreter: Patentanwälte Behrmann Wagner PartG mbB
(86) Internationale Anmeldenummer: PCT/EP2014/076619
(87) Internationale Veröffentlichungsnummer: WO 2015/180803

(56) Entgegenhaltungen:
- EP-A1- 2 801 307
- WO-A1-2010/095937
- DE-A1-102007 008 911
- US-A- 5 845 857

## Beschreibung

Die Erfindung betrifft einen Kaffeebohnenbehälter, insbesondere einen Doppelbohnenbehälter, gemäß Anspruch 1. Derartige Mehrfach-Kaffeebohnenbehälter werden bisher üblicherweise in der Gastronomie, d.h. im professionellen Anwendungsbereich eingesetzt, um unterschiedliche Bohnensorten bevorraten und mit einer Mühle verarbeiten zu können, insbesondere mit dem Ziel, unterschiedliche Kaffeearten herzustellen oder unterschiedliche Bohnen zur Einstellung von Kaffeeeigenschaften gemeinsam der Kaffeemühle zuzuführen. Ferner betrifft die Erfindung ein Verfahren zum Betreiben eines solchen Kaffeebohnenbehälters.

Vorgenannte Mehrfach-Bohnenbehälter, insbesondere Doppel-Bohnenbehälter halten auch zunehmend Einzug in den Haushaltsbereich zusammen mit als Kaffeevollautomaten ausgebildeten Haushaltskaffeemaschinen. Insbesondere hier besteht das Problem, dass ungeübte Benutzer dazu neigen den Mehrfach-Bohnenbehälter nach dem Entriegeln ohne vorheriges Schließen der Bohnenauslässe vom Gehäuse einer Kaffeemühle oder einer Kaffeemaschine abzunehmen, wodurch die Kaffeebohnen aus den mehreren offenen Bohnenauslässen herausfallen, was zeitaufwendige Reinigungsarbeiten nach sich zieht.

Bei Einfach-Bohnenbehältern wurde vorstehend erläutertes Problem bereits insofern gelöst, als dass Verschlusseinheiten zum Verschließen des einzigen Bohnenauslasses vorgesehen wurden. Eine derartige Anordnung ist beispielsweise in der DE 203 00 928 U1 beschrieben, bei der die Verschlusseinheit bzw. die Bewegung eines Verschlusselementes mechanisch an eine Drehbewegung des Bohnenbehälters als solches gekoppelt ist. Derartige Lösungen lassen sich bei den vergleichsweise größeren Mehrfach-Bohnenbehältern nur schwierig umsetzen und es werden mehrere solcher Verschlusseinheiten für die mehreren Bohnenauslässe benötigt.

Aus der DE 31 42 348 A1 ist eine Kaffeemühle mit einem Mahlwerk und einem darüber angeordneten Vorratsbehälter, aus dem Kaffeebohnen in das Mahlwerk zugeführt werden, bekannt.

Die DE 10 2007 008 900 A1 beschreibt einen Bohnenbehälter für einen Getränkeautomaten, mit einem Behältnis zur Aufbewahrung von Bohnen, mit einer Abgabeöffnung für die Zufuhr der Bohnen in ein Mahlwerk.

Die DE 20 2011 005 003 U1 offenbart ein Zweikammerbohnenbehältnis einer Kaffeemaschine mit zwei getrennten Bohnenkammern und einem in deren Böden angeordneten gemeinsamen Bohnenbehälterauslauf.

Aus der US 5,845,857 A ist ein Doppelbohnenbehälter bekannt der zwei Bohnenfächer mit jeweils einem Bohnenauslass umfasst, wobei zu jedem Zeitpunkt immer ein Auslass geöffnet ist und das Öffnungsverhältnis der Bohnenauslässe zum Herstellen unterschiedlicher Mischungsverhältnisse einstellbar ist.

Zum Weiteren Stand der Technik werden die WO 2010/095937 A1, die EP 2801307 A1 sowie die WO 2010/095937 A1 genannt.

Ausgehend von dem vorgenannten Stand der Technik liegt der Erfindung die Aufgabe zugrunde, einen Mehrfach-Kaffeebohnenbehälter, insbesondere Doppel-Bohnenbehälter, also einen Kaffeebohnenbehälter mit mehreren getrennten Bohnenfächern anzugeben, der im Hinblick auf ein Verschließen der Bohnenauslässe sowie ein Verriegeln und Entriegeln an einer Kaffeemühle oder Kaffeemaschine mit integrierter Kaffeemühle komfortabel bedienbar ist. Dabei soll der Kaffeebohnenbehälter, insbesondere ein zur Anwendung kommender Betätigungsmechanismus möglichst einfach aufgebaut und robust gestaltet sein. Ferner besteht die Aufgabe darin, eine Kaffeemühle oder eine Kaffeemaschine mit integrierter Kaffeemühle mit einem derartig verbesserten Kaffeebohnenbehälter anzugeben. Zudem besteht die Aufgabe darin, ein Betriebesverfahren zum optimierten Betreiben eines Kaffeebohnenbehälters anzugeben.

Diese Aufgabe wird hinsichtlich des Kaffeebohnenbehälters mit den Merkmalen des Anspruchs 1 und hinsichtlich der Kaffeemühle bzw. der Kaffeemaschine mit integrierter Kaffeemühle mit den Merkmalen des Anspruchs 11 gelöst. Hinsichtlich des Betriebsverfahrens wird die Aufgabe mit den Merkmalen des Anspruchs 12 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Der erfindungsgemäße Kaffeebohnenbehälter ist ein Mehrfach-Behälter, insbesondere ein Doppelbehälter mit mindestens zwei Bohnenfächern, jeweils umfassend einen Bohnenauslass. Die Bohnenauslässe des erfindungsgemäßen Kaffeebohnenbehälters sind mit Hilfe von über oder unter den Bohnenauslässen angeordneten Verschlussmitteln verschließbar, um zu verhindern, dass beim Abnehmen des Kaffeebohnenbehälters etwaige noch in den Bohnenfächern beinhaltete Kaffeebohnen unbeabsichtigt aus den Bohnenauslässen herausfallen. Zusätzlich zu den Verschlussmitteln sind Verriegelungsmittel vorgesehen, um den Kaffeebohnenbehälter an der Kaffeemühle oder an der Kaffeemaschine (mit integrierter Kaffeemühle) lösbar festlegen, d.h. verriegeln zu können. Erfindungsgemäß umfasst der Kaffeebohnenbehälter ein, insbesondere ein einziges, Betätigungselement, mit dem sowohl die Verschlussmittel als auch die Verriegelungsmittel betätigbar sind. Dabei wirkt das Betätigungselement derart mit den Verschlussmitteln zusammen, dass durch dessen Betätigung, insbesondere zumindest über einen Zeitabschnitt gleichzeitig eine Öffnungs- oder Schließbewegung der Verschlussmittel relativ zu sämtlichen Bohnenauslässen resultiert - anders ausgedrückt sind durch Verstellen des Betätigungselements relativ zu den Bohnenfächern sämtliche Bohnenauslässe der mehreren Bohnenfächer verschließbar und/oder öffnenbar. Um die Bedienung möglichst einfach und robust zu gestalten, kann gleichzeitig mit dem Öffnen oder Schließen sämtlicher Bohnenauslässe durch Betätigung des Betätigungselements der Kaffeebohnenbehälter an der Kaffeemühle oder der Kaffeemaschine mit integrierter Kaffeemühle, insbesondere an einem entsprechenden Gehäuse ver- oder entriegelt werden. Anders ausgedrückt ist erfindungsgemäß also ein ein Betätigungselement umfassender gemeinsamer (Betätigungs-) Mechanismus zum, insbesondere zumindest über einen Zeitabschnitt gleichzeitigen, Betätigen sowohl der Verschlussmittel zum Öffnen und/oder Schließen sämtlicher Bohnenauslässe und zum Verriegeln und/oder Entriegeln der Verriegelungsmittel vorgesehen. Dies bedeutet, dass gemäß einer ersten Option durch Betätigen des Betätigungselementes, insbesondere mit einer einzigen Betätigungsbewegung, sowohl sämtliche Bohnenauslässe mit Hilfe der Verschlussmittel öffenbar sind und zudem, insbesondere durch dieselbe Betätigungsbewegung des Betätigungselementes, die Verriegelungsmittel verriegelbar sind.

Gemäß einer zusätzlich oder alternativ zu der vorgenannten ersten Option realisierbaren zweiten Option ist vorgesehen, dass durch Betätigen des Betätigungselementes, insbesondere mit einer einzigen Betätigungsbewegung sowohl sämtliche Bohnenauslässe verschließbar als auch die Verriegelungsmittel entriegelbar sind.

Der erfindungsgemäße Kaffeebohnenbehälter ist aufgrund der Ausbildung und Anordnung des Betätigungselements bzw. dessen Zuordnung, insbesondere mechanische Kopplung über einen entsprechenden Betätigungsmechanismus sowohl zu den Verschlussmitteln als auch zu den Verriegelungsmitteln besonders einfach bedienbar. Darüber hinaus ist es möglich, dass mit einer einzigen Betätigungsbewegung des Betätigungselements relativ zu den Bohnenfächern, also dem Verstellen des Betätigungselements entlang eines definierten Bewegungspfades oder durch das Rotieren des Bewegungselementes um eine Rotationsachse in eine einzige Rotationsrichtung sowohl ein Öffnen sämtlicher Bohnenauslässe als auch ein Verriegeln der Verriegelungsmittel aktuiert wird und/oder sowohl sämtliche Bohnenauslässe verschlossen und die Verriegelungsmittel entriegelt werden. Von besonderem Vorteil ist dabei, dass vorstehende Vorgänge nicht separat mittels unterschiedlicher Betätigungselemente bzw. Mechanismen aktuiert werden müssen, sondern dies durch Betätigen eines gemeinsamen Betätigungselementes möglich ist - darüber hinaus ist von besonderem Vorteil, dass die Verschlussmittel so gestaltet sind, dass durch deren Betätigung mittels des Betätigungselements sämtliche Bohnenauslässe öffenbar und/oder verschließbar sind.

Im Hinblick auf die Ausgestaltung der Verschlussmittel gibt es unterschiedliche Möglichkeiten. Gemäß einer ersten Variante der Erfindung sind die Verriegelungsmittel derart ausgebildet, dass durch Betätigen des Betätigungselements sämtliche Bohnenauslässe zu einem gemeinsamen Verschlusszeitpunkt verschlossen sind. Dies bedeutet, Verschlusszeitpunkt verschlossen sind. Dies bedeutet, dass die Verschlussmittel den Verschlussvorgang zum Verschließen sämtlicher Bohnenauslässe zu einem gemeinsamen Zeitpunkt beenden, dass also gemeinsam eine Verschlussendstellung der Verschlussmittel an sämtlichen Bohnenauslässen erreicht wird. Gemäß einer alternativen Ausgestaltungsvariante der Erfindung werden zumindest zwei der Bohnenauslässe durch eine entsprechende Ausgestaltung der Verschlussmittel zu unterschiedlichen Zeitpunkten verschlossen, so dass also zumindest einer der Bohnenauslässe zu einem bestimmten Zeitpunkt (noch) weiter geöffnet ist als ein anderer der Bohnenauslässe. Hierdurch wird die Wahrscheinlichkeit verringert, dass gleichzeitig zwei Bohnenauslässe durch Bohnen blockiert sind und sich dadurch die zum Brechen der Bohnen aufzuwendende Schließkraft verdoppelt. Vielmehr können für den Fall, dass sich bei zwei Bohnenauslässen Bohnen im Verschlussweg der Verschlussmittel befinden, diese durch den zeitlich versetzten Schließvorgang nacheinander gebrochen werden.

In Weiterbildung der Erfindung ist mit Vorteil vorgesehen, dass das Betätigungselement relativ zu den Bohnenfächern um eine Rotationsachse rotierbar angeordnet ist, um somit durch eine Rotationsbewegung, insbesondere durch eine einzige Rotationsbewegung sämtliche Bohnenauslässe zu öffnen und auch die Verriegelungsmittel zu verriegeln und/oder durch eine Rotationsbewegung, bevorzugt eine einzige (zu der vorerwähnten Rotationsbewegung gegenläufige) Rotationsbewegung sämtliche Bohnenauslässe zu schließen und die Verriegelungsmittel zu entriegeln. Dabei ist weiterbildungsgemäß vorgesehen, dass die Rotationsbewegung des Betätigungselementes durch geeignete (Umwandlungs-)Mittel in eine translatorische Verschiebebewegung der Verschlussmittel und der Verriegelungsmittel umgewandelt wird, so dass die Verschlussmittel translatorisch relativ zu den Bohnenauslässen verschoben werden können und, vorzugsweise zumindest über einen Zeitabschnitt gleichzeitig, eine Relativbewegung von Verriegelungsmitteln zu den Bohnenfächern bzw. zu der Kaffeemühle oder der Kaffeemaschine resultiert. Durch die Umwandlung der Rotationsbewegung des Betätigungselements in eine translatorische Verschiebebewegung sowohl der Verschlussmittel als auch der Verriegelungsmittel werden große Freiheitsgrade im Hinblick auf die konkrete Gestaltung der Verschluss- und Verriegelungsmittel erzielt und zudem kann, wie später noch erläutert werden wird, durch einfache Maßnahmen Einfluss genommen werden auf die zeitliche Abstimmung der einzelnen Bewegungsschritte zum Öffnen oder Schließen der Bohnenauslässe sowie des Erreichens einer Entriegelungs- oder Verriegelungsstellung.

Ganz besonders bevorzugt ist eine Ausführungsform des Kaffeebohnenbehälters, bei der die Verschluss- und die Verriegelungsmittel derart ausgebildet bzw. über das gemeinsame Betätigungselement betätigbar sind, dass eine Verschlussbewegung der Verschlussmittel zum Verschließen der Bohnenauslässe so auf eine Entriegelungsbewegung der Verriegelungsmittel abgestimmt ist, dass zumindest ein Schließvorgang zum Schließen eines der Bohnenauslässe, vorzugsweise sämtliche Schließvorgänge zum Schließen sämtlicher Bohnenauslässe noch nicht abgeschlossen ist/sind, wenn die Verriegelungsmittel ihre Entriegelungsposition erreicht haben. Es ist also weiterbildungsgemäß vorgesehen, dass der Kaffeebohnenbehälter bereits von einer ihm zugeordneten Kaffeemühle oder Kaffeemaschine abnehmbar ist, bevor der Verschlussvorgang zum Schließen sämtlicher Bohnenauslässe abgeschlossen ist. Es wird also bei entriegelten Verriegelungsmitteln ein Restspalt in Kauf genommen, der vorzugsweise so dimensioniert ist (insbesondere eine Spaltbreite von weniger als 0,6mm), dass durch diesen keine Kaffeebohnen aus dem entsprechenden Bohnenfach mehr herausfallen können, damit der Verschlussvorgang zum Verschließen der Bohnenauslässe bei einer etwaigen eingeklemmten Bohne nicht notwendigerweise bis zu Ende geführt werden muss, um den Kaffeebohnenbehälter von der Kaffeemühle oder der Kaffeemaschine abnehmen zu können. Diese Weiterbildung berücksichtigt die Tatsache, dass eine etwaige eingeklemmte Bohne die Verschlusskraft für das vollständige Schließen der Bohnenauslässe deutlich erhöht.

Ganz besonders bevorzugt ist es, insbesondere zur Realisierung der vorerwähnten translatorischen Verschiebebewegung, wenn die Verriegelungsmittel und die Verschlussmittel Schiebermittel umfassen, welche durch Betätigung des Betätigungselementes translatorisch verschiebbar sind und vorzugsweise dabei die Bohnenauslässe öffnen oder schließen und den Kaffeebohnenbehälter ver- oder entriegeln. Grundsätzlich ist es möglich, separate Schiebermittel bzw. Schieberelemente für die Verriegelungsmittel und die Verschlussmittel vorzusehen - ganz besonders bevorzugt ist es, wenn die Verriegelungsmittel und die Verschlussmittel gemeinsame Schiebermittel, insbesondere ein gemeinsames Schieberelement umfassen, welches bevorzugt gleichzeitig die Öffnungs- und Schließfunktion hinsichtlich der Bohnenauslässe und auch die Verriegelungs- und Entriegelungsfunktion, insbesondere durch Zusammenwirken mit einem entsprechenden, bevorzugt kaffeemühlen- oder kaffeemaschinenseitigen Gegen- bzw. Verriegelelement bewirkt.

In konstruktiv besonders vorteilhafter Weise wird eine Umwandlung einer rotatorischen Betätigungsbewegung des Betätigungselements in eine translatorische Verschiebebewegung des oder der Schiebermittel entlang einer geradlinigen Bewegungsbahn umgewandelt mittels eines Zahnstangengetriebes, wobei hierzu bevorzugt ein drehfest mit dem Betätigungselement verbundenes oder einteilig mit diesem ausgebildetes Zahnrad unmittelbar oder alternativ mittelbar, insbesondere über mindestens ein weiteres Zahnrad mit einer dem oder den Schiebermittel(n) zugeordneten Zahnstange zusammenwirkt, um so durch eine Rotation des Betätigungselements eine translatorische Verschiebebewegung des oder der Schiebermittel zu bewirken. Ganz besonders bevorzugt ist es, wenn die Zahnstange auf einer die Rotationsbewegung des Betätigungselementes übertragenden Zahnrades abgewandeten Seite in Eingriff ist mit einem weiteren (Widerlager-) Zahnrad, welches durch translatorisches Verstellen der Zahnstange aufgrund des Eingriffs in die Zahnstange mitrotiert wird. Bevorzugt umfasst das vorerwähnte Zahnstangengetriebe eine sich parallel zu den Längsmittelachsen der Bohnenauslässe und/oder senkrecht zu einer Flächenerstreckung der Schiebermittel erstreckende Welle, die das Betätigungselement bildet oder von diesem rotierbar ist, wobei vorgenannte Welle bevorzugt ein Zahnrad trägt oder einteilig mit einem Zahnrad ausgebildet ist, welches mittelbar oder unmittelbar die dem oder den Schiebermittel/n zugeordnete Zahnstange betätigt.

Besonders vorteilhaft ist eine Ausgestaltung des Kaffeebohnenbehälters, bei der die Schiebermittel, insbesondere als umfangsgeschlossene Durchgangsöffnungen ausgebildete, Aussparungen aufweisen, wobei jedem der Bohnenauslässe eine Aussparung zugeordnet ist. Die Aussparungen fluchten bei geöffneten Bohnenauslässen mit diesen, so dass die Bohnen durch die Bohnenauslässe und die Aussparungen schwerkraftbedingt nach unten fallen können. Bei verschlossenen Bohnenauslässen sind die Aussparungen relativ zu diesen verschoben und die Bohnenauslässe werden, vorzugsweise unmittelbar durch die Schiebermittel, blockiert.

Bevorzugt umfassen die Schiebermittel im Randbereich der Aussparungen einen gezackten Rand bzw. gezackten Randabschnitt, um hierdurch somit die Flächenpressung zum Zerbrechen einer etwaigen im Weg befindlichen Kaffeebohne zu erhöhen.

Besonders zweckmäßig ist eine Ausführungsform, bei der sämtliche vorgenannten Aussparungen, die zumindest zum Teil auch als randseitig offene Aussparungen ausgestaltet sein können, auf einem gemeinsamen Schieberelement angeordnet sind. Insbesondere bei einer Ausführungsform, bei der die Schiebermittel Aussparungen aufweisen, die in ihrer Öffnungsstellung mit den Bohnenauslässen fluchten, ist es konstruktiv einfach realisierbar die Verschließzeitpunkte unterschiedlicher Bohnenauslässe zeitlich zu versetzen, durch eine entsprechend versetzte Anordnung der Aussparungen auf den Schiebermitteln, insbesondere auf dem gemeinsamen Schieberelement. Zusätzlich oder alternativ können unterschiedliche Verschlusszeitpunkte realisiert werden, indem mindestens zwei Aussparungen eine unterschiedliche Längenerstreckung in der Verschieberichtung der Schiebermittel aufweisen, um somit (bei einer einzigen Schiebermittelendstellung) unterschiedliche Endschließzeitpunkte zu realisieren, mit dem Ziel zu vermeiden, dass gleichzeitig mehrere Kaffeebohnen mit Hilfe der Schiebermittel gebrochen werden müssen.

Gemäß einer besonders vorteilhaften Ausgestaltung der Erfindung ist vorgesehen, dass die Schiebermittel, insbesondere das Schieberelement, der Verschlussmittel zumindest nicht über die gesamte Flächenerstreckung der Bohnenauslässe diese unmittelbar verschließt, sondern dass den Schiebermitteln mindestens ein Verschlusselement, vorzugsweise separate Verschlusselemente für die mehreren Bohnenauslässe zugeordnet sind, die bevorzugt zusammen mit den Schiebermitteln translatorisch verstellbar sind, wobei das mindestens eine Verschlusselement dazu dient, die Verschiebebewegung der Schiebermittel von dem eigentlichen Schließen der Bohnenauslässe zu entkoppeln, um eine Betätigung der Betätigungsmittel in eine Betätigungsendposition, insbesondere in eine Rotationsendposition, zu ermöglichen, auch wenn eines der Verschlusselemente aufgrund einer in den zugehörigen Bohnenauslass gefangenen Kaffeebohne nicht in eine zugehörige Verschlussendposition verstellbar ist. Dabei ist das mindestens eine Verschlusselement bevorzugt zusammen mit den Schiebermitteln verstellbar, jedoch auch relativ zu diesen, so dass die Verstellbewegung des Schiebermittel über das Betätigungselement weitergeführt werden kann, auch wenn sich die Bewegung des mindestens einen Verschlusselementes verzögert oder diese Bewegung, beispielsweise durch eine Kaffeebohne blockiert ist. Besonders einfach ist dies konstruktiv lösbar, indem das mindestens eine Verschlusselement in Richtung seiner Verschlussendposition federkraftbeaufschlagt ist, wobei sich die Feder bevorzugt zum einen an den Schiebermitteln und zum anderen an dem Verschlusselement abstützt. Befindet sich bei einer derartigen Anordnung eine Kaffeebohne zwischen einem Öffnungsrand einer Bohnenauslassöffnung und einer vorderen Verschlusselementkante, stoppt die Kaffeebohne die Weiterbewegung des Verschlusselementes, wobei die mindestens eine diesem zugeordnete Feder (Federmittel) gespannt wird. Gleichzeitig werden die Schiebermittel jedoch weiter in Richtung ihrer Endposition verstellt. Bricht nun diese Kaffeebohne zu irgendeinem Zeitpunkt oder fällt nach unten heraus, kann das federkraftbeaufschlagte Verschlusselement selbsttätig in seine Verschlussendposition relativ zu den dann bevorzugt bereits feststehenden Schiebermitteln verstellt werden.

Bevorzugt ist eine Ausführungsform, bei der jedem Bohnenauslass ein eigenes Verschlusselement zugeordnet ist. Grundsätzlich ist es auch möglich nur einem einzigen Bohnenauslass oder eine Auswahl von Bohnenauslässen (jeweils) ein Verschlusselement zuzuordnen. Auch ist es denkbar, mehreren, insbesondere sämtlichen Auslässen ein gemeinsames Verschlusselement zuzuordnen.

Eine besonders komfortable Bedienung des Kaffeebohnenbehälters bzw. Betätigung des Betätigungselementes ist gegeben, wenn das Betätigungselement so angeordnet ist, dass es von einer Kaffeebohnenbehälteroberseite her betätigbar ist. Ganz besonders bevorzugt ist es dabei, wenn das Betätigungselement zwischen zwei separaten, abnehmbaren Deckeln für die Bohnenfächer angeordnet ist.

Die Erfindung führt auch auf eine Kaffeemühle oder eine Kaffeemaschine mit integrierter Kaffeemühle und einem lösbar daran verriegelbaren, nach dem Konzept der Erfindung ausgebildeten (Mehrfach-) Kaffeebohnenbehälter, der mindestens zwei getrennte und jeweils einen Bohnenauslass aufweisenden Bohnenfächer umfasst. Zudem führt die Erfindung auf ein Betriebsverfahren zum Betreiben eines Kaffeebohnenbehälters bzw. auf ein Verfahren zum gemeinsamen Öffnen der Bohnenauslässe und Verriegeln der Verriegelungsmittel und/oder zum gemeinsamen Schließen sämtlicher Bohnenauslässe und zum Entriegeln der Verriegelungsmittel. Erfindungsgemäß ist vorgesehen, dass ein Betätigungselement betätigt wird und durch die Betätigung, insbesondere mit einer einzigen Betätigungsbewegung sowohl sämtliche Bohnenauslässe geöffnet, also auch die Verriegelungsmittel verriegelt werden und/oder das Betätigungselement betätigt wird, insbesondere in eine entgegengesetzte Betätigungsrichtung, wodurch sämtliche Bohnenauslässe verschlossen und die Verriegelungsmittel entriegelt werden, um so, beispielsweise zu Reinigungszwecken den Kaffeebohnenbehälter von der Kaffeemühle oder Kaffeemaschine entnehmen zu können und dabei ein Herausfallen von Kaffeebohnen aus den Bohnenfächern sicher zu verhindern.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine Ansicht eines als Doppelbohnenbehälter ausgebildeten Kaffeebohnenbehälter gemäß der Erfindung,
- Fig. 2: eine Darstellung des Betätigungsmechanismus des Kaffeebohnenbehälters gemäß Fig. 1, wobei Verriegelungsmittel verriegelt und Bohnenauslässe geöffnet sind,
- Fig. 3: eine Ansicht des Betätigungsmechanismus, wobei hier die Verriegelungsmittel entriegelt sind und die Verschlussmittel die Bohnenauslassöffnungen noch nicht vollständig verschlossen haben,
- Fig. 4: eine seitliche Ansicht des Betätigungsmechanismus zur Visualisierung eines Schiebermittelantriebs bzw. Zahnstangenantriebs,
- Fig. 5: eine alternative Ausgestaltung des Betätigungsmechanismus zum zeitversetzten Verschließen der Auslassöffnungen, und
- Fig. 6: eine stark schematisierte Darstellung einer alternativen Ausgestaltung der Verschlussmittel, wobei hier die Schiebermittel gefedert gelagerte Verschlusselemente tragen, die relativ zu den Schiebermitteln verstellbar sind, um so eine Betätigungsbewegung des Betätigungselementes von einer eigentlichen Verschlussbewegung zu entkoppeln.

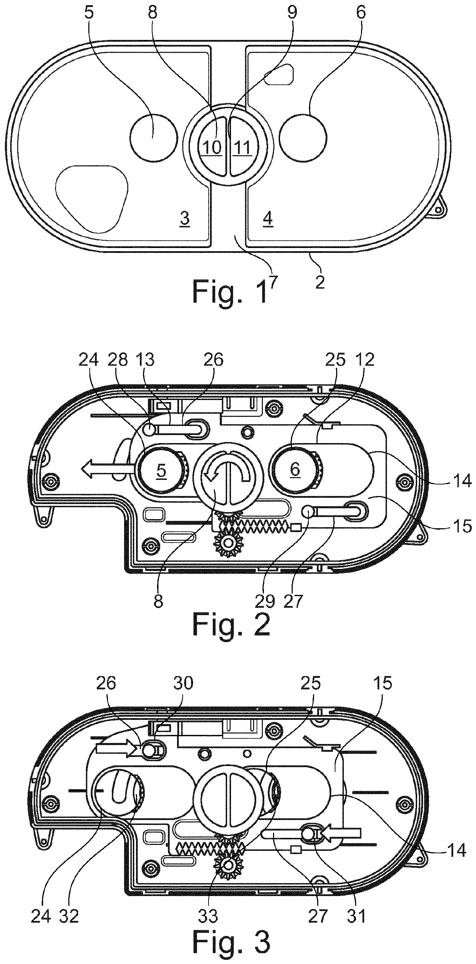

In den Fig. 1 bis 4 ist ein erstes Ausführungsbeispiel eines als Mehrfachbohnenbehälters, hier als Doppelbohnenbehälter ausgebildeten Kaffeebohnenbehälters 1 gezeigt. In einer in Fig. 1 gezeigten Ansicht von oben, bei welcher aus Übersichtlichkeitsgründen Verschlussdeckel nicht dargestellt sind, ist zu erkennen, dass der Kaffeebohnenbehälter 1 ein Gehäuse 2 umfasst, welches ein erstes und ein davon separates zweites Bohnenfach 3, 4 umhaust. Im Bodenbereich der Bohnenfächer 3, 4 sind ein erster und ein zweiter Bohnenauslass 5, 6 vorgesehen, durch die hindurch Kaffeebohnen ausschließlich schwekraftbedingt nach unten hin in Richtung einer nicht dargestellten Kaffeemühle fallen können.

Wie aus der Draufsicht gemäß Fig. 1 zu erkennen ist, sind die beiden Bohnenfächer 3, 4 über eine vertikale Trennwand 7 voneinander getrennt, in die ein Betätigungselement 8 integriert ist. Das Betätigungselement 8 ist als Rotationsgriff ausgebildet und umfasst zwei über einen Steg 9 getrennte Vertiefungen 10, 11 zum Eingreifen mit zwei Fingern eines Benutzers. In Fig. 2 ist eine tiefere Ebene des Kaffeebohnenbehälters 1 sichtbar - die Bohnenfächer 2, 4 sind ausgeblendet. Zu erkennen ist jedoch weiterhin das rotierbar angeordnete Betätigungselement 8, mit welchem Verschlussmittel 12 sowie Verriegelungsmittel 13 betätigbar sind und zwar gleichzeitig durch eine Rotationsbetätigungsbewegung des Betätigungselementes 8.

Die Verschlussmittel 12 dienen zum Öffnen und Schließen der Bohnenauslässe 5, 6 während die Verriegelungsmittel 13 im Kaffeebohnenbehälter 1 an einer Kaffeemaschine oder einer Kaffeemühle verriegeln können.

Die Verschlussmittel 12 sowie die Verriegelungsmittel 13 umfassen gemeinsame Schiebermittel 14 in Form eines gemeinsamen bzw. einzigen Schieberelementes 15, welches translatorisch in der Zeichnungsebene von rechts nach links und von links nach rechts verstellbar ist und zwar aktuiert durch eine Rotationsbewegung des Betätigungselementes 8.

Zur Umwandlung einer Rotationsbewegung des Betätigungselementes 8 sind entsprechende Mittel 16 vorgesehen. Diese umfassen ein Zahnstangengetriebe 17, welches wiederum eine rotierbare Welle 18 umfasst, an dem stirnseitig die Betätigungsmittel 8 angeordnet sind.

Die Welle 18 erstreckt sich senkrecht zur Flächenerstreckung der Schiebermittel 14 und zu den nicht eingezeichneten Längsmittelachsen der Bohnenauslässe 5, 6.

Drehfest mit der Welle 18 ist an dem von dem Betätigungselement 8 abgewandten Endbereich der Welle 18 ein erstes Zahnrad 19 vorgesehen, welches durch Rotieren des Betätigungselementes 8 über die Welle 18 rotiert wird. Das erste Zahnrad 19 ist in Eingriff mit einem in derselben Ebene befindlichen zweiten Zahnrad 20, welches mit einer Zahnstange 21 kämmt, die in dem gezeigten Ausführungsbeispiel als einteilig mit dem Schieberelement 15 ausgebildetes Kunststoffspritzgussteil ausgebildet ist.

Auf der dem zweiten Zahnrad 20 gegenüberliegenden Seite der Zahnstange 21 ist als Widerlager ein Stützzahnrad 22 angeordnet und auf einem Gehäusebolzen 23 rotierbar angeordnet, um somit eine optimale Führung der Schiebemittel 14 bei ihrer Verschiebebewegung zu garantieren.

Aus den Figuren ist ersichtlich, dass die Schiebermittel den Bohnenauslässen 5, 6 zugeordnete Aussparungen 24, 25 umfassen, die in der in Fig. 2 gezeigten Öffnungsposition der Schiebermittel 14 mit den Bohnenauslässen 5, 6 fluchten, so dass Bohnen schwerkraftbedingt nach unten austreten können. In einer Verschlussendposition der Schiebermittel 14, die in Fig. 3 fast erreicht ist, sind die Aussparungen 24, 25 seitlich verschoben bzw. fluchten nicht mehr mit den Bohnenauslässen 5, 6, so dass die Bohnenauslässe 5, 6 verschlossen sind, hier beispielhaft unmittelbar durch die Schiebermittel 14 bzw. das Schieberelement 15.

Zur Realisierung der Verriegelungsmittel umfassen die Schiebermittel 14 bzw. umfasst das Schieberelement 15 in dem gezeigten Ausführungsbeispiel zwei längliche Durchgangsöffnungen 26, 27, wobei grundsätzlich auch eine einzige längliche sich in der Verstellrichtung der Schiebermittel 14 erstreckende Durchgangsöffnung ausreichen würde. Zwei längliche Durchgangsöffnungen 26, 27 sind zur Vermeidung eines unsachgemäßen Abhebelns des Bohnenbehälters 1 jedoch von Vorteil. Die länglichen Durchlässe 26, 27 werden in den Kaffeebohnenbehälter 1 in einem Bereich unterhalb der Bohnenfächer 3, 4 durchsetzt von Verriegelungsbolzen 28, 29 der Kaffeemühle bzw. der Kaffeemaschine, wobei die Verriegelungsbolzen 28, 29 ein verdicktes oberes Ende aufweisen, so dass der Kaffeebohnenbehälter 1 nicht entnommen werden kann, solange die Verriegelungsbolzen 28, 29 in den zugehörigen länglichen Durchgangsöffnungen 26, 27 gefangen sind. Zum Entriegeln der Verriegelungsmittel müssen die Schiebermittel 14 bzw. muss das gemeinsame Schieberelement 15 von der in Fig. 2 gezeigten Verriegelungsposition, in welcher auch die Bohnenauslässe 5, 6 verschlossen sind, in der Zeichnungsebene translatorisch nach links verstellt werden - in eine in Fig. 3 gezeigte Position und zwar durch Rotieren des Betätigungselementes 8 in der in Fig. 2 angedeuteten Rotationsrichtung um eine senkrecht zur Darstellungsebene angeordnete Rotationsachse. Hierdurch gelangen die Verriegelungsbolzen 28, 29 in zugehörige, mit den länglichen Durchgangsöffnungen 26, 27 verbundene Freigabeöffnungen 30, 31 in den Schiebermitteln 14, deren Querschnitt es erlaubt, über die verdickten Enden der Verriegelungsbolzen 28, 29 herausgehoben zu werden, so dass also der Kaffeebohnenbehälter 1 entriegelt ist und von der Kaffeemühle bzw. der Kaffeemaschine entnommen werden kann.

Der Kombination aus länglichen Durchgangsöffnungen 26, 27 und den Verriegelungsbolzen 28, 29 kommt gleichzeitig noch eine Führungsfunktion vor zur axialen Führung der Schiebermittel 14 während ihrer translatorischen Verschieberbewegung.

In Fig. 3 ist nun eine besonders vorteilhafte Ausgestaltung gezeigt, wonach die Verriegelungsposition der Verriegelungsmittel erreicht ist, wenn die Verschlussmittel 12 die Bohnenauslässe 5, 6 noch nicht vollständig verschlossen haben bzw. wenn eine Endverstellposition der Verschlussmittel noch nicht erreicht ist. Ein verbleibender Restspalt 32, 33 zwischen den Auslassöffnungen und den Verschlussmitteln wird dabei in Kauf genommen. Dieser ist bevorzugt so dimensioniert, dass durch diesen keine Bohnen mehr hindurchpassen.

Bevorzugt erstreckt sich der maximal gefedert zurücklegbare Weg der Verschlusselemente nur über einen Teilabschnitt der Gesamtbewegungsstrecke der Verschiebermittel, wobei dieser Weg bevorzugt mindestens 0,4 cm, noch weiter bevorzugt mindestens 0,6 cm beträgt und/oder vorzugsweise weniger als 2 cm, insbesondere weniger als 1,6 cm.

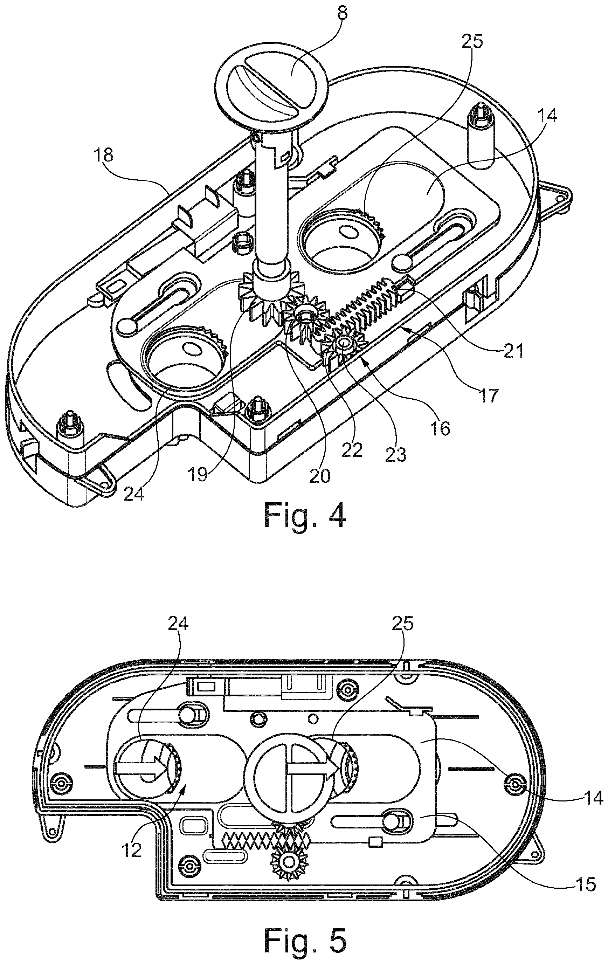

In Fig. 5 ist eine alternative Ausführungsform des Betätigungsmechanismus gezeigt. Zur Vermeidung von Wiederholungen wird im Wesentlichen nur auf die Unterschiede zu dem Ausführungsbeispiel gemäß den Fig 1 bis 4 eingegangen. Bei dem Ausführungsbeispiel gemäß Fig. 5 unterscheidet sich die Erstreckung der Aussparungen 24, 25 in der Verstellrichtung der Schiebermittel 14 bzw. des Schieberelementes 15, wobei die in der Zeichnungsebene rechte Aussparung 25 eine größere Erstreckung in dieser Richtung aufweist, so dass die Verschlussmittel 12 die den linken Bohnenauslass vor dem rechten Bohnenauslass verschließen - anders ausgedrückt wandert bei einem translatorischen Verstellen der Schiebermittel 14 die linke Aussparung 24 vor der rechten Aussparung 25 aus der Überdeckung mit dem jeweiligen Bohnenauslass. Auf diese Weise wird vermieden, dass gleichzeitig zwei Kaffeebohnen zerbrochen werden müssen.

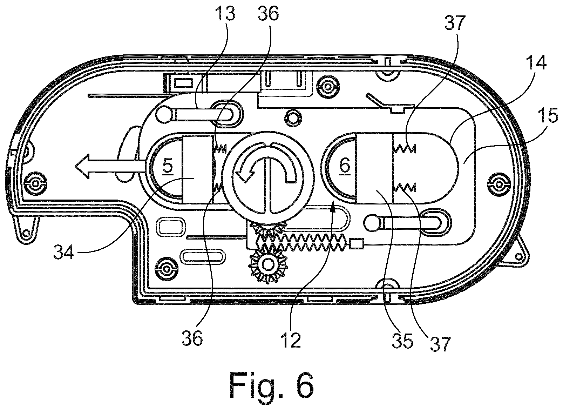

In Fig. 6 ist das grundsätzliche Funktionsprinzip einer alternativen Ausgestaltung des Betätigungsmechanismus gezeigt. Hier umfassen die Verschlussmittel 12 den Schiebermitteln 14 zugeordnete Verschlusselemente 34, 35, die zusammen mit den Schiebermitteln 14 translatorisch verstellbar sind und zudem relativ zu den Schiebermitteln 14, für den Fall, dass sich bei der Verschlussbewegung im Schließbereich eine Kaffeebohne befindet. In diesem Fall bleibt das entsprechende Verschlusselement 34, 35 faktisch stehen und diesen zugeordnete Federmittel 36, 37, mit denen sich die Verschlussmittel mittelbar oder unmittelbar an den Schiebermitteln abstützen, werden bei einer durch das Betätigungselement aktuierten Weiterbewegung der Schiebermittel 14 gespannt.

Auf diese Weise wird die Verschlussbewegung der Schiebermittel nicht behindert, d.h. die Schiebermittel 14 bzw. das Schieberelement 15 kann in eine Verschlussendstellung bewegt werden und trotzdem kann noch mindestens ein Bohnenauslass 5, 6 geöffnet sein aufgrund der Relativverstellung der Schiebermittel 14 zu zumindest einem der Verschlusselemente 34, 35. Sobald die Kaffeebohne aus dem Eingriffsbereich entfernt wurde, schließt das entsprechende Verschlusselement 34, 35 selbsttätig die zugehörige Bohnenauslassöffnung 5, 6, wobei sich zu diesem Zweck die Federmittel 36, 37 entspannen.

### Bezugszeichenliste

- 1: Kaffeebohnenbehälter
- 2: Gehäuse
- 3: erstes Bohnenfach
- 4: zweites Bohnenfach
- 5: erster Bohnenauslass
- 6: zweiter Bohnenauslass
- 7: Trennwand
- 8: Betätigungselement
- 9: Steg
- 10: Vertiefung
- 11: Vertiefung
- 12: Verschlussmittel
- 13: Verriegelungsmittel
- 14: Schiebermittel
- 15: Schieberelement
- 16: Mittel
- 17: Zahnstangengetriebe
- 18: Welle
- 19: erstes Zahnrad
- 20: zweites Zahnrad
- 21: Zahnstange
- 22: Stützzahnrad
- 23: Gehäusebolzen
- 24: Aussparung
- 25: Aussparung
- 26: Durchgangsöffnung
- 27: Durchgangsöffnung
- 28: Verriegelungsbolzen
- 29: Verriegelungsbolzen
- 30: Freigabeöffnung
- 31: Freigabeöffnung
- 32: Restspalt
- 33: Restspalt
- 34: Verschlusselement
- 35: Verschlusselement
- 36: Federmittel
- 37: Federmittel

## Patentansprüche

1. Kaffeebohnenbehälter, insbesondere Doppelbohnenbehälter, mit einem einen ersten Bohnenauslass (6) aufweisenden ersten Bohnenfach (3) und mit mindestens einem einen zweiten Bohnenauslass (6) aufweisenden zweiten Bohnenfach (4), mit den Bohnenauslässen (5, 6) zugeordneten Verschlussmittel (12) zum Verschließen der Bohnenauslässe (5, 6), mit Verriegelungsmitteln (13) zum Verriegeln des Bohnenbehälters an der Kaffeemühle oder an der Kaffeemaschine, und mit einem von einem Benutzer betätigbaren und dabei relativ zu den Bohnenfächern (3, 4) bewegbaren Betätigungselement (8), wobei
der Kaffeebohnenbehälter zum lösbaren Festlegen an einer Kaffeemühle oder einer Kaffeemaschine mit integrierter Kaffeemühle ausgebildet ist, und dass die Verschlussmittel (12) derart ausgebildet sind, dass sämtliche Bohnenauslässe (5, 6) zu einem gemeinsamen Verschlusszeitpunkt verschlossen sind oder dass die Verschlussmittel (12) derart ausgebildet sind, dass die ersten und die zweiten Bohnenauslässe (5, 6) zeitlich versetzt verschließbar sind **dadurch gekennzeichnet, dass** das Betätigungselement (8) sowohl zum Öffnen sämtlicher Bohnenauslässe (5, 6) als auch zum Verriegeln der Verriegelungsmittel (13), insbesondere mit einer einzigen Betätigungsbewegung, und/ oder sowohl zum Schließen sämtlicher Bohnenauslässe (5, 6) als auch zum Entriegeln der Verriegelungsmittel (12), insbesondere mit einer einzigen Betätigungsbewegung, ausgebildet und angeordnet ist.

2. Kaffeebohnenbehälter nach Anspruch 1,
**dadurch gekennzeichnet,**
**dass** das Betätigungselement (8) um eine Rotationsachse rotierbar angeordnet ist, und dass dem Betätigungselement (8) Mittel (16) zur Umwandlung einer rotierenden Betätigungsbewegung in eine translatorische Verschiebebewegung der Verschlussmittel (12) und der Verriegelungsmittel (13) zugeordnet sind.

3. Kaffeebohnenbehälter nach einem der vorhergehenden Ansprüche,
**dadurch gekennzeichnet,**
**dass** die Verschlussmittel (12) und die Verriegelungsmittel (13) derart mittels des gemeinsamen Betätigungselementes (8) betätigbar sind, dass eine Verschlussbewegung der Verschlussmittel (12) zum Verschließen der Bohnenauslässe (5, 6) so auf eine Entriegelungsbewegung der Verriegelungsmittel (13) abgestimmt ist, dass zumindest ein Schließvorgang zum Schließen eines der Bohnenauslässe (5, 6), vorzugsweise sämtliche Schließvorgänge zum Schließen sämtlicher Bohnenauslässe (5, 6), noch nicht abgeschlossen ist/sind, wenn die Verriegelungsmittel (13) ihre Entriegelungsposition erreicht haben.

4. Kaffeebohnenbehälter nach einem der vorhergehenden Ansprüche,
**dadurch gekennzeichnet,**
**dass** die Verriegelungsmittel (13) und die Verschlussmittel (12) separate oder gemeinsame Schiebermittel (14) umfassen, die durch Betätigung des Betätigungselementes (8) translatorisch verschiebbar sind.

5. Kaffeebohnenbehälter nach Anspruch 4,
**dadurch gekennzeichnet,**
**dass** zur Umwandlung einer rotatorischen Betätigungsbewegung des Betätigungselementes (8) in eine translatorische Verschiebebewegung der Schiebermittel (14) ein Zahnstangengetriebe (17) vorgesehen ist.

6. Kaffeebohnenbehälter nach Anspruch 5,
**dadurch gekennzeichnet,**
**dass** das Zahnstangengetriebe (17) eine sich, vorzugsweise parallel zu den Längsmittelachsen der Bohnenauslässe (5, 6) und/oder senkrecht zu einer Flächenerstreckung der Schiebermittel (14) erstreckende, Welle umfasst, die das Betätigungselement (8) bildet oder von diesem rotierbar ist.

7. Kaffeebohnenbehälter nach einem der Ansprüche 4 bis 6,
**dadurch gekennzeichnet,**
**dass** die Schiebermittel (14) mit, insbesondere als umfangsgeschlossene Durchgangsöffnungen (26, 27) ausgebildete Aussparungen (24, 25) für die Bohnenauslässe (5, 6) aufweisen, die bei geöffneten Bohnenauslässen (5, 6) mit diesen fluchten, wobei bevorzugt sämtliche Aussparungen (24, 25) für die Bohnenauslässe (5, 6) auf einem gemeinsamen Schieberelement (15) angeordnet sind.

8. Kaffeebohnenbehälter nach einem der Ansprüche 4 bis 7,
**dadurch gekennzeichnet,**
**dass** die Betätigungsbewegung des Betätigungselementes (8), zumindest teilweise, von einer Verschlussbewegung von zumindest einem, insbesondere sämtlichen, zusammen mit den Schiebermitteln (14) verstellbaren Verschlusselement/en (34, 35) der Verschlussmittel (12) entkoppelt ist, um ein Betätigen der Betätigungsmittel in eine Betätigungsendposition, insbesondere eine Rotationsendposition zu ermöglichen, auch wenn eines der Verschlusselemente (34, 35) aufgrund einer in dem zugehörigen Bohnenauslass (5, 6) gefangenen Kaffeebohne nicht in eine Verschlussendposition verstellbar ist.

9. Kaffeebohnenbehälter nach Anspruch 8,
**dadurch gekennzeichnet,**
**dass** mindestens eines der Verschlusselemente (34, 35) in Richtung seiner Verschlussendposition federkraftbeaufschlagt, insbesondere an den Schiebermitteln (14), angeordnet ist.

10. Kaffeebohnenbehälter nach einem der vorhergehenden Ansprüche,
**dadurch gekennzeichnet,**
**dass** das Betätigungselement (8) von einer Kaffeebohnenbehälteroberseite her betätigbar ist und bevorzugt in einem Bereich zwischen zwei separaten, abnehmbaren Deckeln für die Bohnenfächer (2, 3) angeordnet ist.

11. Kaffeemühle oder Kaffeemaschine mit integrierter Kaffeemühle und einem lösbar daran verriegelbaren Kaffeebohnenbehälter (1) nach einem der vorhergehenden Ansprüche.

12. Verfahren zum Betreiben eines Kaffeebohnenbehälters, insbesondere eines Doppelbohnenbehälter, vorzugsweise nach einem der vorhergehenden Ansprüche, mit einem einen ersten Bohnenauslass (5) aufweisenden ersten Bohnenfach (3) und mit mindestens einem einen zweiten Bohnenauslass (6) aufweisenden zweiten Bohnenfach (4), mit den Bohnenauslässen (5, 6) zugeordneten Verschlussmittel (12) zum Verschließen der Bohnenauslässe (5, 6), mit Verriegelungsmitteln (13) zum Verriegeln des Bohnenbehälters an der Kaffeemühle oder an der Kaffeemaschine, und mit einem von einem Benutzer betätigbaren und dabei relativ zu den Bohnenfächern (3, 4) bewegbaren Betätigungselement wobei sämtliche Bohnenauslässe (5, 6) zu einem gemeinsamen Verschlusszeitpunkt verschlossen werden oder dass die ersten und die zweiten Bohnenauslässe (5, 6) zeitlich versetzt verschlossen werden, **dadurch gekennzeichnet, dass** durch das Betätigen des Betätigungselementes (8), insbesondere mit einer einzigen Betätigungsbewegung, sowohl sämtliche Bohnenauslässe (5, 6) geöffnet, als auch die Verriegelungsmittel (12) verriegelt werden, und/oder durch das Betätigen des Betätigungselementes (8), insbesondere mit einer einzigen Betätigungsbewegung (8), sowohl sämtliche Bohnenauslässe (5, 6) verschlossen als auch die Verriegelungsmittel (12) entriegelt werden.

## Claims

1. A coffee bean container, in particular a double bean container having a first bean compartment (3) comprising a first bean outlet (6) and at least one second bean compartment (4) comprising a second bean outlet (6), closure means (12) assigned to the bean outlets (5, 6) for closing the bean outlets (5, 6), locking means (13) for locking the bean container to the coffee grinder or to the coffee machine, and an actuating element (8) actuatable by a user and moveable relative to the bean compartments (3, 4),
the coffee bean container being designed for a releasable fixing on a coffee grinder or a coffee machine with an integrated coffee grinder, and that the closure means (12) are designed in such a manner that all bean outlets (5, 6) are closed at a common closure time or that the closure means (12) are designed in such a manner that the first and the second bean outlets (5, 6) can be closed temporarily offset,
**characterized in that**
the actuating element (8) is designed and arranged for both opening all bean outlets (5, 6) and for locking the locking means (13), in particular by means of a single actuating movement, and/or for both closing all bean outlets (5, 6) and unlocking the locking means (13), in particular by means of a single actuating movement.

2. The coffee bean container according to claim 1,
**characterized in that**
the actuating element (8) is arranged so as to be rotatable around an axis of rotation, and that the actuating element (8) is assigned means (16) for converting a rotating actuating movement into a translational displacement movement of the closure means (12) and the locking means (13).

3. The coffee bean container according to any one of the preceding claims,
**characterized in that**
the closure means (12) and the locking means (13) are actuatable by means of the common actuating element (8) in such a manner that a closure movement of the closure means (12) for closing the bean outlets (5, 6) is adapted to an unlocking movement of the locking means (13) in such a manner that at least one closing movement for closing one of the bean outlets (5, 6), preferably all closing movements for closing all bean outlets (5, 6), is/are not yet completed when the locking means (13) have reached their unlocking position.

4. The coffee bean container according to any one of the preceding claims,
**characterized in that**
the locking means (13) and the closure means (12) comprise separate or common slider means (14), which can be displaced in a translational manner by actuating the actuating element (8).

5. The coffee bean container according to claim 4,
**characterized in that**
a rack and pinion gear (17) is provided for the conversion of a rotational actuating movement of the actuating element (8) into a translational displacement movement of the slider means (14).

6. The coffee bean container according to claim 5,
**characterized in that**
the rack and pinion gear (17) comprises a shaft extending preferably parallel to the longitudinal central axes of the bean outlets (5, 6) and/or perpendicular to a surface extension of the slider means (14), which forms the actuating element (8) or can be rotated by said actuating element.

7. The coffee bean container according to any one of claims 4 to 6,
**characterized in that**
the slider means (14) comprise recesses (24, 25) for the bean outlets (5, 6) which are formed as circumferentially closed through openings (26, 27), which are flush with the bean outlets (5, 6) if said bean outlets are open, preferably all recesses (24, 25) for the bean outlets (5, 6) being disposed on a common slider element (15).

8. The coffee bean container according to any one of claims 4 to 7,
**characterized in that**
the actuating movement of the actuating element (8) is at least partially decoupled from a closure movement of at least one, in particular all, closure element/s (34, 35) of the closure means (12) that can be adjusted together with the slider means (14), in order to allow for an actuation of the actuating means into an actuation end position, in particular a rotation end position, even if one of the closure elements (34, 35) cannot be adjusted into a closure end position due to a coffee bean being trapped in the corresponding bean outlet (5, 6).

9. The coffee bean container according to claim 8,
**characterized in that**
at least one of the closure elements (34, 35) is arranged in a spring-loaded manner in the direction of its closure end position, in particular on the slider means (14).

10. The coffee bean container according to any one of the preceding claims,
**characterized in that**
the actuating element (8) can be actuated from a top side of the coffee bean container and is preferably arranged in an area between two separate, removable covers for the bean compartments (2, 3).

11. A coffee grinder or a coffee machine with an integrated coffee grinder and a coffee bean container (1) that can be releasably locked thereto according to any one of the preceding claims.

12. A method for operating a coffee bean container, in particular a double bean container, preferably according to any one of the preceding claims, having a first bean compartment (3) comprising a first bean outlet (5) and at least one second bean compartment (4) comprising a second bean outlet (6), closure means (12) assigned to the bean outlets (5, 6) for closing the bean outlets (5, 6), locking means (13) for locking the bean container to the coffee grinder or to the coffee machine, and an actuating element (8) actuatable by a user and moveable relative to the bean compartments (3, 4),
all bean outlets (5, 6) being closed at a common closure time or that the first and the second bean outlets (5, 6) are closed temporarily offset,
**characterized in that**
by actuating the actuating element (8), in particular by means of a single actuating movement, both all bean outlets (5, 6) are opened and the locking means (13) are locked, and/or by actuating the actuating element (8), in particular by means of a single actuating movement (8), both all bean outlets (5, 6) are closed and the locking means (13) are unlocked.

## Revendications

1. Réservoir à grains de café, notamment un réservoir à grains double, comprenant un premier compartiment à grains (3) ayant une première sortie de grains (5) et comprenant au moins un deuxième compartiment à grains (4) ayant une deuxième sortie de grains (6), comprenant des moyens de fermeture (12) assignés aux sorties de grains (5, 6) pour fermer les sorties de grains (5, 6), comprenant des moyens de verrouillage (13) pour verrouiller le réservoir à grains sur le moulin à café ou sur la machine à café, et comprenant un élément d'actionnement (8) qui peut être actionné par un utilisateur et qui peut être déplacé par rapport aux compartiments à grains (3, 4), le réservoir à grains de café étant formé pour une fixation détachable sur un moulin à café ou une machine à café ayant un moulin à café intégré, et que les moyens de fermeture (12) sont formés de telle manière que toutes les sorties de grains (5, 6) sont fermées à un moment de fermeture commun ou que les moyens de fermeture (12) sont formés de telle manière que la première et la deuxième sortie de grains (5, 6) peuvent être fermées l'une après l'autre,
**caractérisé en ce que**
l'élément d'actionnement (8) est formé et disposé pour ouvrir toutes les sorties de grains (5, 6) et pour verrouiller les moyens de verrouillage (13), notamment au moyen d'un seul mouvement d'actionnement, et/ou pour fermer toutes les sorties de grains (5, 6) et pour déverrouiller les moyens de verrouillage (13), notamment au moyen d'un seul mouvement d'actionnement.

2. Réservoir à grains de café selon la revendication 1,
**caractérisé en ce que**
l'élément d'actionnement (8) peut être tourné autour d'un axe de rotation, et que des moyens (16) pour convertir un mouvement d'actionnement rotatif en un mouvement de déplacement en translation des moyens de fermeture (12) et des moyens de verrouillage (13) sont assignés à l'élément d'actionnement (8).

3. Réservoir à grains de café selon l'une quelconque des revendications précédentes,
**caractérisé en ce que**
les moyens de fermeture (12) et les moyens de verrouillage (13) peuvent être actionnés au moyen de l'élément d'actionnement (8) commun de telle manière qu'un mouvement de fermeture des moyens de fermeture (12) pour fermer les sorties de grains (5, 6) est adapté à un mouvement de déverrouillage des moyens de verrouillage (13) de telle manière qu'au moins un mouvement de fermeture pour fermer une des sorties de grains (5, 6), de préférence tous les mouvements de fermeture pour fermer toutes les sorties de grains (5, 6) n'est pas/ne sont pas encore terminé(s) lorsque les moyens de verrouillage (13) ont atteint leur position de déverrouillage.

4. Réservoir à grains de café selon l'une quelconque des revendications précédentes,
**caractérisé en ce que**
les moyens de verrouillage (13) et les moyens de fermeture (12) comprennent des moyens de glissière (14) séparés ou communs qui peuvent être déplacés en translation par l'actionnement de l'élément d'actionnement (8).

5. Réservoir à grains de café selon la revendication 4,
**caractérisé en ce**
**qu'**un engrenage à crémaillère (17) est prévu pour convertir un mouvement d'actionnement rotatif de l'élément d'actionnement (8) en un mouvement de déplacement en translation des moyens de glissière (14).

6. Réservoir à grains de café selon la revendication 5,
**caractérisé en ce que**
l'engrenage à crémaillère (17) comprend un arbre qui s'étend, de préférence, parallèlement aux axes médians longitudinaux des sorties de grains (5, 6) et/ou perpendiculairement à une extension de la surface des moyens de glissière (14), ledit arbre formant l'élément d'actionnement (8) ou ledit arbre pouvant être tourné par ledit élément d'actionnement.

7. Réservoir à grains de café selon l'une quelconque des revendications 4 à 6,
**caractérisé en ce que**
les moyens de glissière (14) comprennent des évidements (24, 25) pour les sorties de grains (5, 6), notamment formés comme ouvertures de passage (26, 27) circonférentiellement fermées, lesdites évidements étant alignés avec les sorties de grains (5, 6) quand les sorties de grains (5, 6) sont ouvertes, de préférence toutes les évidements (24, 25) pour les sorties de grains (5, 6) étant disposés sur un élément de glissière (15) commun.

8. Réservoir à grains de café selon l'une quelconque des revendications 4 à 7,
**caractérisé en ce que**
le mouvement d'actionnement de l'élément d'actionnement (8) est, au moins partiellement, découplé d'un mouvement de fermeture d'au moins un élément de fermeture, notamment de tous les éléments de fermeture (34, 35) des moyens de fermeture (12), qui peuvent être déplacés avec les moyens de glissière (14), afin de permettre un actionnement des moyens d'actionnement dans une position d'actionnement finale, notamment une position de rotation finale, même si un des éléments de fermeture (34, 35) ne peut pas être déplacé dans une position de fermeture finale à cause d'un grain de café qui est bloqué dans la sortie de grains (5, 6) correspondante.

9. Réservoir à grains de café selon la revendication 8,
**caractérisé en ce**
**qu'**une force de ressort est appliquée à au moins un des éléments de fermeture (34, 35) en direction de sa position de fermeture finale, ledit élément de fermeture étant disposé notamment sur les moyens de glissière (14).

10. Réservoir à grains de café selon l'une quelconque des revendications précédentes,
**caractérisé en ce que**
l'élément d'actionnement (8) peut être actionné d'un côté supérieur du réservoir à grains de café et que ledit élément d'actionnement est de préférence disposé dans une zone entre deux couvercles séparés et amovibles pour les compartiments à grains (2, 3).

11. Moulin à café ou machine à café ayant un moulin à café intégré et un réservoir à grains de café (1) selon l'une quelconque des revendications précédentes qui peut être verrouillé de manière détachable sur ledit moulin à café.

12. Procédé de fonctionnement d'un réservoir à grains de café, notamment un réservoir à grains double, de préférence selon l'une quelconque des revendications précédentes, comprenant un premier compartiment à grains (3) ayant une première sortie de grains (5) et comprenant au moins un deuxième compartiment à grains (4) ayant une deuxième sortie de grains (6), comprenant des moyens de fermeture (12) assignés aux sorties de grains (5, 6) pour fermer les sorties de grains (5, 6), comprenant des moyens de verrouillage (13) pour verrouiller le réservoir à grains sur le moulin à café ou sur la machine à café, et comprenant un élément d'actionnement (8) qui peut être actionné par un utilisateur et qui peut être déplacé par rapport aux compartiments à grains (3, 4), toutes les sorties de grains (5, 6) étant fermées à un moment de fermeture commun ou que la première et la deuxième sortie de grains (5, 6) sont fermées l'une après l'autre,
**caractérisé en ce que**
toutes les sorties de grains (5, 6) sont ouvertes et les moyens de verrouillage (13) sont verrouillés par l'actionnement de l'élément d'actionnement (8), notamment au moyen d'un seul mouvement d'actionnement, et/ou que toutes les sorties de grains (5, 6) sont fermées et les moyens de verrouillage (13) sont déverrouillés par l'actionnement de l'élément d'actionnement (8), notamment au moyen d'un seul mouvement d'actionnement.
